# EUROPEAN PATENT SPECIFICATION

(11) **EP 1 907 492 B1**
(45) Date of publication and mention of the grant of the patent: **08.01.2014**
(21) Application number: 06783409.3
(22) Date of filing: 25.07.2006
(51) Int. Cl.: C09D 163/00, C09D 5/08, C09D 5/10, C09D 4/00, C09D 4/02, C09D 133/00, C09D 183/00, C08L 63/00, C08L 83/00, C23C 28/00

(54) **PRE-SEALED STEEL SHEET WITH IMPROVED ANTI- CORROSION AND WELDABILITY AND PREPARING METHOD THEREOF**
VORVERGÜTETES STAHLBLECH MIT VERBESSERTER KORROSIONSSICHERHEIT UND VERSCHWEISSBARKEIT SOWIE HERSTELLUNGSVERFAHREN DAFÜR
FEUILLE D'ACIER PRE-SCELLEE PRESENTANT UNE ANTICORROSION ET UNE SOUDABILITE AMELIOREES ET PROCEDE DE PREPARATION DE CELLE-CI

(30) Priority: 25.07.2005 KR 20050067392; 25.07.2005 KR 20050067393
(43) Date of publication of application: 09.04.2008
(60) Divisional application: 12187658.5
(73) Proprietor: Posco, Pohang-si, Kyungsangbook-do 790-300 (KR); Buhmwoo Institute of Technology Research, Hwasung, Kyungki-do 445-941 (KR)
(72) Inventor: CHO, Jae-Dong, Pohang, Kyungsangbook-do 790-300 (KR); JIN, Yeong-Sool, c/o POSCO, Pohang, Kyungsangbook-do 790-300 (KR); LEE, Jae-Ryung, Cheonlanam-do 545-711 (KR); CHOI, Jong-Woo, c/o Buhmwoo Inst. Tech. Research, Hwasung, Kyungki-do 445-941 (KR); KIM, Woon-Jong, c/o Buhmwoo Inst.of Tech. Research, Hwasung, Kyungki-do 445-941 (KR); JIN, Suk-Hwan c/o Buhmwoo Institute of Technology, Hwasung, Kyungki-do 445-941 (KR)
(74) Representative: Larcher, Dominique
(86) International application number: PCT/KR2006/002930
(87) International publication number: WO 2007/013761

(56) References cited:
- EP-A2- 1 233 043
- WO-A2-00/32351
- WO-A2-01/46495
- WO-A2-03/011984
- JP-A- 07 242 833
- JP-A- 11 129 387
- KR-A- 20040 059 131
- KR-A- 20050 063 979
- KR-B1- 100 256 326
- US-A- 5 338 348
- US-A1- 2004 086 718

## Description

### Technical Field

The present invention relates to a pre-sealed steel sheet with improved corrosion resistance and weldability, and a method for producing the pre-sealed steel sheet. More specifically, the present invention relates to a pre-sealed steel sheet with improved corrosion resistance, processability and electrodeposition paintability as well as superior weldability, a method for producing the pre-sealed steel sheet, and compounds for coating on the pre-sealed steel sheet.

### Background Art

In automobile companies, steel sheets supplied from iron and steel makers are assembled into car bodies, followed by phosphate treatment and painting. The steel sheets partially overlap each other at some sites, for example, hems of car doors, during assembly into automobile bodies. Since such overlapped sites of the steel sheets are not readily treated with phosphate solutions or paints, they are highly susceptible to corrosion. To solve this problem, automobile companies have employed methods for sealing overlapped sites of steel sheets to block access of corrosive factors to the ov erlapped sites. However, the sealing methods result in low productivity and increased production costs. Under these circumstances, there is a need for a surface-treated steel sheet that can be produced without undergoing any sealing.

European steel makers produce steel sheet products by galvanizing steel sheets, treating the galvanized steel sheets with a chromate or chromium-free pretreatment solution, and forming an organic coating layer with a thickness of about 2 to 8 µm on the pretreated steel sheets. The steel sheet products ensure improved corrosion resistance even at sites where no phosphate coating treatment or painting treatment is applied, thus avoiding the need to seal the sites. For these reasons, the steel sheet products are called "pre-sealed steel sheets". In order to ensure improved corrosion resistance of this pre-sealed steel sheet, the formation of a thick resin coating layer on the pre-sealed steel sheet is required, thus leading to deterioration of electrical resistance weldability (spot weldability). In attempts to solve this problem, some methods associated with the addition of highly electrically conductive metal powders have been proposed. However, the addition of metal powders makes resin coating layers thicker, causing poor weldability.

On the other hand, the use of substances harmful to humans, such as heavy metals, including chromium, lead, mercury and cadmium, particularly, hexavalent chromium, in steel sheets for automobiles and household appliances, has been restricted by govemmental regulations in many countries, particularly European countries and Japan. There is a demand for an environmentally friendly resin-coated steel sheet that contains no harmful heavy metal and satisfies quality requirements, such as improved corrosion resistance, weldability, processability, adhesiveness and paintability.

In general, direct coating of a resin on a steel sheet leads to a degradation in the affinity between the steel sheet and the resin layer, and as a result, corrosion resistance and adhesion of the steel sheet to the resin are deteriorated. Accordingly, it is required to form a pretreatment layer on top of a plated steel sheet before coating of the plated steel sheet with a resin in order to enhance the adhesion between the plated steel sheet and the resin. Physical properties required for the pretreatment layer include corrosion resistance, adhesion to the resin, adhesion to the steel sheet, weldability, and so forth. Under current environmental regulations, the pretreatment layer is also required to contain no chromium. Pretreatment solutions for pre-sealed steel sheets that have been developed in European countries are low-temperature (PMT 80°C) baking no-rinse type solutions, most of which are acidic. These pretreatment solutions are of two-liquid type due to their chemical instability. Therefore, the pretreatment solutions are mixed in a production line before use.

### Disclosure of Invention

### Technical Problem

It is one object of the present invention to provide a pre-sealed steel sheet with improved corrosion resistance, weldability, adhesion to resins, processability and electrodeposition paintability.

It is another object of the present invention to provide a method for producing the pre-sealed steel sheet

It is another object of the present invention to provide a chromium-free pretreatment solution.

### Technical Solution

In accordance with one aspect of the present invention, there is provided composition of chromium-free pretreatment solution for use in the production of a pre-sealed steel sheet, the pretreatment solution comprising 1.0 to 15.0% by weight of at least one resin selected from water-dispersible acrylic and epoxy resins having a number average molecular weight of 5,000 to 15,000, 0.05 to 5.0% by weight of at least one nanoclay selected from bentonite and montmorillonite nanoclays, 0.1 to 5.0% by weight of at least one resin as hardner selected from melamine-resin hardeners, 1.0 to 25.0% by weight of at least one silicate selected from colloidal silica and metal silicate compounds having a pH of 7.0 or above, 0.1 to 10.0% by weight of at least organometallic oxide selected from organotitanates and organozirconates, and the balance of water, based on the total weight of the pretreatment solution.

There is also provided a resin solution for use in the production of a pre-sealed steel sheet, the resin solution comprising 1.0 to 25.0% by weight of an epoxy resin having a number average molecular weight of 150 to 500, 5.0 to 10.0% by weight of melamine-resin hardener, 0.1 to 5.0% by weight of a hexamethylene blocked diisocyanate urethane resin, 40 to 60% by weight of at least one metal powder selected from the group consisting of Ni, Zn, Fe₂P, FeP, Ti and Sn powders, 5.0 to 15.0% by weight of calcium ion-exchanged amorphous silicon dioxide, and the balance of a solvent, based on the total weight of the resin solution.

In accordance with another aspect of the present invention, there is provided a method for producing a pre-sealed steel sheet, the method comprising the steps of:
applying a chromium-free pretreatment solution to at least one surface of the metal base to form a chromium-free pretreatment coating layer having a dry thickness of 0.05 to 1.0µm (micrometer); and
forming the chromium-free pretreatment coating layer as baking the coated chromium-free pretreatment solution at a temperature of 60 to 298°C and following by cooling;

In addition, it is also provided the method for producing a pre-sealed steel sheet further comprising additional following steps;
applying a weldable resin solution to the dried pretreatment coating layer to form a coating layer having a dry thickness of 2.0 to 5.0µm; and
forming a pre-sealed resin coating layer as baking the steel sheet coated with weldable resin solution at 220-298°C and following by air-cooling or water-cooling.

In accordance with one aspect of the present invention, there is provided a weldable pre-sealed steel sheet with improved corrosion resistance and weldability, comprising:
(a) a metal base; and
(b) a chromium-free pretreatment coating layer formed on at least one surface of the metal base;

In addition, it is also provided this weldable pre-sealed steel sheet with improved corrosion resistance and weldability further comprising:
(c) a pre-sealed resin coating layer formed on at least one surface of the chromium-free pretreatment coating layer.

### Brief Description of the Drawings

The above and other objects, features and other advantages of the present invention will be more clearly understood from the following detailed description taken in conjunction with the accompanying drawing, in which:

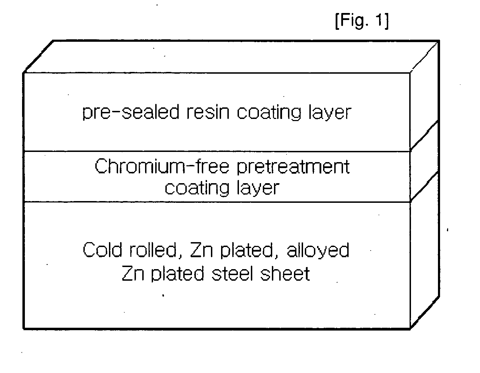

FIG. 1 is a side cross-sectional view of a pre-sealed steel sheet according to the present invention.

### Best Mode for Carrying Out the Invention

The present invention will now be described in detail.

The physical properties of the pre-sealed steel sheet according to the present invention are greatly affected by the pretreatment layer and the resin layer. The uppermost resin layer of the pre-sealed steel sheet according to the present invention exerts a primary shielding effect against corrosive factors and a secondary shielding effect against sudden dissolution and loss of the underlying pretreatment layer, thus playing a role in ensuring corrosion resistance of the resin-coated steel sheet. The pretreatment coating layer of the steel sheet exerts a shielding effect against corrosive factors to ensure corrosion resistance of the steel sheet, adhesion to the steel sheet and adhesion to the overlying resin layer, thereby improving corrosion resistance of the pre-sealed steel sheet and preventing delamination of the resin layer during processing. Accordingly, if the pretreatment layer does not satisfy the requirements, the intended physical properties, such as improved corrosion resistance and processability, of the pre-sealed steel sheet are not achieved.

In order to allow the pretreatment coating layer to have an advantageous structure for ensuring good adhesion to the resin layer and the steel sheet, at least one resin selected from epoxy and acrylic resins is added. The resin has hydrophilic groups, such as hydroxyl (-OH) groups. The presence of hydrophilic groups in the resin facilitates the formation of the resin layer on the pretreatment layer and lowers the drying temperature. In addition, the resin acts as a binder for binding the other additives. The resin may be added in an amount of 1 to 15% by weight, based on the total weight of the pretreatment solution. When the resin is used in an amount of less than 1% by weight, good adhesion to the underlying steel sheet and the overlying resin-coated layer cannot be guaranteed and effective binding of the other additives cannot be achieved. Meanwhile, when the resin is used in an amount exceeding 15% by weight, improved corrosion resistance and adhesiveness are achieved but poor weldability is caused.

The resin used in the preparation of the pretreatment solution according to the present invention has a number average molecular weight of 5,000 to 15,000. If the resin has a number average molecular weight lower than 5,000, it reacts with an amine rather than a melamine resin a hardener, which causes precipitation of the resin, or it makes the coating layer too compact, which facilitates delamination of the coating layer. Meanwhile, if the resin has a number average molecular weight higher than 15,000, the solution composition becomes highly viscous, which makes it difficult to form a uniform coating film, and the drying temperature is increased, which causes a deterioration in workability and an increase in cleaning costs of production facilities and production costs. To achieve better workability, a dispersion of 10-30% by weight of the resin in water is preferably used rather than the resin being used alone.

As a hardener for the epoxy or acrylic resin, a melamine resin can be used. A melamine-formaldehyde resin whose ends are substituted with alkyl groups is particularly preferred. The methylated melamine-formaldehyde resin is added in an amount of 0.1 to 5.0% by weight, based on the total weight of the pretreatment solution. When the content of the hardener in the pretreatment solution is less than 0.1% by weight, the coating layer is insufficiently hardened and thus the desired physical properties cannot be guaranteed. Meanwhile, when the content of the hardener in the pretreatment solution exceeds 5.0% by weight, an excessive amount of the hardener does not show a significant enhancement in hardening effects and there arises a danger of deterioration in the stability of the pretreatment solution and the physical properties of the resin coating layer due to self-condensation of the excess hardener.

At least one water-dispersible nanoclay selected from bentonite and montmorillonite nanoclays can be added to improve the corrosion resistance of the pretreatment layer. The nanoclay is highly alkaline, swells several times its initial volume when it absorbs water, making the pretreatment solution highly viscous, causes no precipitation after storage for a long period of time, and tends to form a smooth film. Based on these characteristics, the nanoclay is used in the production of paints and coating agents. Further, since the water-dispersible nanoclay has a triple lamellar structure of silicic acid-alumina-silicic acid, it improves the barrier effect of the pretreatment layer against gases, such as oxygen, carbon dioxide and chlorine compounds, thus achieving improved corrosion resistance. Furthermore, since the water-dispersible nanoclay is highly hygroscopic, it can improve the dispersibility of the pretreatment solution.

The nanoclay is added in an amount of 0.05 to 5.0% by weight, based on the total weight of the pretreatment solution. When the content of the nanoclay in the pretreatment solution is less than 0.05% by weight, the barrier effect is negligible and thus there is no appreciable improvement in corrosion resistance. When the content of the nanoclay in the pretreatment solution is more than 5.0% by weight, the viscosity of the pretreatment solution is greatly increased and the hardness of the pretreatment coating layer is increased after baking. Such increased viscosity and hardness cause swelling of the coating layer, make the coating layer non-uniform, induce formation of insufficiently covered spots, and lower the adhesion to the overlying resin layer, thus undesirably causing delamination of the resin layer.

It is preferred to disperse 0.5-15.0% by weight of the nanoclay alone in water. Alternatively, the nanoclay is first peeled in a small amount of 2-amino-2-methyl-1-propanol and then the resulting solution is added. Direct addition of the nanoclay to the pretreatment solution may allow the nanoclay to absorb liquid components, and as a result, the viscosity of the pretreatment solution is markedly increased and coagulation of the pretreatment solution may take place. Accordingly, it is preferred to add a dispersed solution of the nanoclay in water.

Further, 1.0 to 25.0% by weight of at least one silicate selected from colloidal silica and silicate compounds of metals, such as Li and Na, having a pH of 7.0 or above is added to improve the corrosion resistance of the steel sheet and the adhesion to the base steel sheet. If the silicate is added in an amount of less than 1.0% by weight, there is no improvement in adhesiveness and corrosion resistance. Although the silicate is added in an amount exceeding 25.0% by weight, an excessive amount of the silicate does not contribute to further improvement of corrosion resistance and adhesiveness. It is preferred to use a dispersion of 10-30% by weight of the silicate compound in water in view of dispersibility.

At least one organometallic oxide selected from organotitanates and organozirconates is added to the pretreatment solution. The organometallic oxide serves as a catalyst to improve the binding force of the colloidal silica, and inherently contributes to an improvement in corrosion resistance and weldability. The organometallic oxide is added in an amount of 0.1 to 10.0% by weight. When the organometallic compound is added in an amount of less than 0.1 % by weight, the catalytic activity of the organometallic compound to bind the silica cannot be expected. Meanwhile, when the organometallic compound is added in an amount exceeding 10.0% by weight, an excessive amount of the organometallic compound does not contribute to further improvement of catalytic activity and corrosion resistance, the pretreatment solution may be gelled, and the production costs are markedly increased. It is preferable to use a dispersion of 40-60% by weight of the organometallic compound in water.

From the viewpoint of improvement in the adhesion between the resin layer and the base steel sheet, if needed, the pretreatment solution may further comprise a coupling agent. The coupling agent is preferably at least one compound selected from Al-Zr compounds and 3-glycidoxypropyltrimethoxy silane. The coupling agent may be added in an amount of less than 3.0% by weight, based on the total weight of the pretreatment solution. When the coupling agent is added in an amount of more than 3.0% by weight, deterioration in adhesiveness is caused due to a reaction between the binding accelerator and the resin, and as a result, the overlying resin layer may be delaminated.

Optionally, the pretreatment solution may further comprise 0.1 to 3.0% by weight of at least one dispersant selected from polysiloxane compounds (polyether-modified polydimethyl siloxane) and carboxylate compounds (preferably hydroxycarboxylate ester) to improve the wettability of the pretreatment solution. When the dispersant is added in an amount of less than 0.1% by weight, the effect of dispersing the pretreatment solution is small and thus there is no wettability of the pretreatment solution. Meanwhile, when the dispersant is added in an amount of more than 3.0% by weight, the wettability of the pretreatment solution is drastically increased, making it difficult to control the amount of the pretreatment solution attached to the steel sheet upon coating of the pretreatment solution.

Optionally, the pretreatment solution may further comprise aminocarboxylate compounds as a corrosion resistance improver. The corrosion resistance improver can be added in an amount of less than 5.0% by weight. Although the corrosion resistance improver is added in an amount of more than 5.0% by weight, an excessive amount of the corrosion resistance improver shows no improvement in corrosion resistance and an increase in production costs is involved.

It is preferable to maintain the total solids content of the pretreatment solution at a level of 3 to 20%. A solids content of less than 3% leads to a marked increase in the thickness of the wet coating layer. As a result, drying of the wet coating layer is not readily conducted so that the desired dry thickness is not obtained, which makes the surface of the coating layer uneven, and therefore, it is necessary to increase the drying temperature. Meanwhile, a solids content of more than 20% leads to an increase in the precipitation rate of the pretreatment solution. As a result, the stability of the pretreatment solution may be damaged.

On the other hand, the uppermost resin layer of the pre-sealed steel sheet must protect the underlying pretreatment layer, and at the same time, be sufficiently strong so as to be highly resistant to alkali and solvents. If the resin coating layer is not sufficiently strong, it does not withstand an alkaline degreasing solution and an acidic phosphate solution during degreasing and phosphate treatment when being applied to car bodies. As a result, the resin coating layer is peeled off or damaged and thus the intended physical properties, such as corrosion resistance, of the pre-sealed steel sheet are not achieved.

The resin solution must exhibit corrosion resistance at some sites, e.g., hems, which are not painted by electrodeposition, of car bodies where pre-sealed steel sheets are applied. In addition, the resin solution must be suitable for electrodeposition painting at other sites, such as plated steel sheets and cold rolled steel sheets for use in automobiles. In order to allow the resin coating layer to have an advantageous structure for electrodeposition painting, the resin preferably contains hydroxyl (-OH) groups or amide (-NH₂) groups. To this end, an epoxy resin is used as a base resin of the weldable resin solution.

The epoxy resin used in the weldable resin solution has a number average molecular weight of 150 to 500. Particularly, a diglycidyl ether or epichlorohydrin-bisphenol A type epoxy resin can be used as the epoxy resin. When the epoxy resin has an average molecular weight lower than 150, it is difficult to float metal particles contained in the resin solution due to low viscosity, the resin is precipitated, and the coating layer becomes too compact after reaction with a hardener, which facilitates delamination of the coating layer. Meanwhile, when the epoxy resin has a number average molecular weight higher than 500, the solution composition becomes highly viscous, which makes it difficult to form a uniform coating film, workability is deteriorated, cleaning costs of production facilities are increased, and production costs are increased. The epoxy resin is added in an amount of 10.0 to 25.0% by weight, based on the total weight of the resin solution. When the epoxy resin is added in an amount of less than 10% by weight, effective binding between a metal powder and other additives is not achieved, which results in deterioration of corrosion resistance, and dissolution of the metal powder occurs, which results in deterioration of adhesiveness. Meanwhile, when the epoxy resin is added in an amount exceeding 25% by weight, the proportion of the metal powder in the solution composition is lowered, resulting in considerable deterioration of weldability, and the stability of the resin solution is worsened, for example, the resin solution is hardened.

As a hardener for the epoxy resin, a melamine resin can be used. Particularly preferred is a methylated melamine-formaldehyde resin whose ends are substituted with methyl groups. The melamine resin is added in an amount of 5.0 to 10.0% by weight, based on the total weight of the resin solution. When the content of the hardener in the resin solution is less than 5.0% by weight, the coating layer is insufficiently hardened and thus the desired physical properties cannot be guaranteed. Meanwhile, when the content of the hardener in the resin solution exceeds 10.0% by weight, an excessive amount of the hardener does not show a significant enhancement in hardening effects and there arises a danger of deterioration in the stability of the resin solution and the physical properties of the resin coating layer due to self-condensation of the excess hardener.

Steel sheets for use in automobiles are required to have chipping resistance in order to prevent delamination of coatings caused by external impacts. To achieve better chipping resistance, a urethane resin, which can also be used as a hardener for the epoxy resin, is added. A preferred urethane resin added to the resin solution is a hexamethylene blocked diisocyanate urethane resin having an equivalent weight of 350 to 400, based on the NCO. The hexamethylene blocked diisocyanate urethane resin is added in an amount of 1.0 to 15.0% by weight, based on the total weight of the resin solution. Since diisocyanate groups rapidly react with hydroxyl groups of polyhydric alcohols and epoxy resins at room temperature, a diisocyanate whose ends are blocked must be used. When the content of the urethane resin in the resin solution is less than 1.0% by weight, the desired chipping resistance cannot be achieved. Meanwhile, the addition of the urethane resin in an amount of more than 15.0% by weight affects the hardening of the resin solution, and as a result, the desired physical properties of the coating layer are not exhibited.

A metal powder is added to improve the weldability, which is an essential requirement for resin-coated steel sheets for use in automobiles. The metal powder is preferably spherical in view of smooth spreadability upon application of the resin solution. The metal powder preferably has an average particle size of 1.5 to 3.5 µm. A metal powder having a particle size below 1.5 µm is highly priced and makes it difficult to form a circular structure in which the metal particles are linked to one another, thus impeding the flow of electricity upon welding. Meanwhile, when the metal powder has a particle size above 3.5 µm, the metal particles are protruded from the surface of the resin coating layer, causing damage to the surface appearance of the coating layer, non-uniform electrodeposition painting and deterioration of corrosion resistance.

The metal powder is selected from the group consisting of Ni, Al, Zn, Fe₂P, FeP, Ti and Sn powders. These metal powders may be used alone or in combination thereof. Hard metal powders are advantageous over soft metal powders from the standpoint of easy weldability. However, since there is a danger that hard metal powders may impair a press upon processing in automobile companies, soft metal powders are used either alone or as a mixture with 20% or less of hard metal powders.

The metal powder is present in an amount of 40 to 60% by weight. Less than 40% by weight of the metal powder causes poor weldability. Meanwhile, the presence of an excessive amount (more than 60% by weight) of the metal powder allows the metal particles to be rendered into a powder form despite being slightly processed.

For better corrosion resistance, a calcium (Ca) ion-exchanged amorphous silicon dioxide is added in an amount of 5.0 to 15.0% by weight, based on the total weight of the resin solution. When the silicon dioxide is added in an amount of less than 5.0% by weight, there is no appreciable improvement in corrosion resistance. Meanwhile, when the silicon dioxide is added in an amount exceeding 15.0% by weight, the weldability is deteriorated and the viscosity of the resin solution is increased. At this time, the silicon dioxide preferably has an average particle size of 2.3 to 3.6 µm. When the silicon dioxide has a particle size of less than 2.3 µm, the viscosity of the resin solution is greatly increased due to increased surface area of the silicon dioxide and the thixotrophy is undesirably increased. Meanwhile, when the silicon dioxide has a particle size of more than 3.6 µm, the silicon dioxide is not readily mixed with the resin and thus improvement of corrosion resistance cannot be anticipated. In addition, the silicon dioxide having a particle size of more than 3.6 µm causes non-uniform painting, leading to deterioration of corrosion resistance.

As a solvent added to the weldable resin solution, it can be used at least one high-boiling point solvent selected from the group consisting of xylene, acetate, ether glycol groups and diacetone alcohol.

Optionally, the weldable resin solution may further comprise at least one organometallic oxide selected from organotitanates and organozirconates. The organometallic oxide is added in an amount of 0.1 to 10.0% by weight, based on the total weight of the resin solution. The organometallic oxide functions as a catalyst to improve the binding force between the silicon dioxide and the resin, and contributes to an improvement in corrosion resistance and weldability. When the organometallic compound is added in an amount of less than 0.1% by weight, the catalytic activity of the organometallic compound to bind the silica cannot be expected. Meanwhile, when the organometallic compound is added in an amount exceeding 10.0% by weight, an excessive amount of the organometallic compound does not contribute to further improvement of catalytic activity and corrosion resistance, the resin solution may be gelled, and the production costs are markedly increased.

Further, sorbitol polyglycidyl ether having a water-soluble backbone with a molecular weight of 150 to 250 may be added as an ether-based adhesion enhancer to improve the adhesion of the resin layer to the chromium-free pretreatment layer and an electrodeposited coating layer. The ether-based adhesion enhancer can be added in an amount of 1.0 to 5.0% by weight, based on the total weight of the resin solution. When the ether-based adhesion enhancer is added in an amount of less than 1.0% by weight, there is no improvement in adhesiveness. Meanwhile, when the ether-based adhesion enhancer is added in an amount of more than 5.0% by weight, the desired physical properties cannot be attained due to a reaction with the resin such as the epoxy resin within the solution composition.

From the standpoint of improved adhesion of the resin layer to the base steel sheet, the weldable resin solution may further comprise a coupling agent. The coupling agent is preferably at least one compound selected from Al-Zr compounds and 3-glycidoxypropyltrimethoxy silane. The coupling agent may be added in an amount of less than 3.0% by weight, based on the total weight of the resin solution. When the coupling agent is added in an amount of more than 3.0% by weight, the resin is entangled due to a reaction between the binding accelerator and the resin, resulting in deterioration of adhesiveness and delamination of the overlying resin layer.

Optionally, the weldable resin solution of the present invention may further comprise wax in order to prevent the delamination of the resin coating layer during molding of the pre-sealed steel sheet. The wax is selected from polyethylene, polytetrafluoroethylene and carnauba wax. Polyethylene-polytetrafluoroethylene (PE-PTFE) mixed or modified wax also can be used. The amount of the wax added is in the range of 1.0 to 3.0% by weight.

When the wax is added in an amount of less than 1.0% by weight, the resin coated layer may be delaminated during processing due to an increased surface friction force, and as a result, the desired processability cannot be attained. Meanwhile, when the wax is added in an amount of more than 3.0% by weight, an excessive amount of the wax is dissolved into the surface of the coating layer during drying without contributing to lowering of the friction force, and as a result, corrosive factors infiltrate the coating layer, leading to deterioration of corrosion resistance. The wax that is preferably used in the present invention serves to impart lubricity after formation of the coating layer. In view of ease of the preparation of the resin solution, the wax preferably has a melting point of 100°C or higher, and a solution of 30 to 40% by weight of the wax in a solvent, such as glycol ether, is preferably used.

The weldable resin solution of the present invention may further comprise p-toluene sulfonic acid or dibutyl tin dilaurate as a hardening accelerator. The hardening accelerator can be added in an amount of 0.1 to 3.0% by weight, based on the total weight of the resin solution. When the hardening accelerator is added in an amount of less than 0.1% by weight, the hardening cannot be sufficiently promoted. Meanwhile, when the hardening accelerator is added in an amount of more than 3.0% by weight, the hardening rate is sharply increased, making it difficult to control the degree of hardening, and as a result, uncoated portions or pinholes remain on the surface of the resin layer due to evaporation of the solvent.

Optionally, the weldable resin solution may further comprise 0.1 to 3.0% by weight of at least one dispersant selected from polysiloxane compounds (polyether-modified polydimethyl siloxane) and carboxylate compounds (preferably hydroxycarboxylate ester) to improve the wettability of the weldable resin solution. When the dispersant is added in an amount of less than 0.1% by weight, the effect of dispersing the resin solution is small and thus there is no wettability of the resin solution. Meanwhile, when the dispersant is added in an amount of more than 3.0% by weight, the wettability of the resin solution is drastically increased, making it difficult to control the amount of the resin attached to the steel sheet upon coating of the pretreatment solution.

A more detailed explanation of a method for producing the pre-sealed steel sheet using the chromium-free pretreatment solution and the weldable resin solution will be provided below.

In another aspect of the present invention, the pre-sealed steel sheet can be produced by applying a chromium-free pretreatment solution to a metal base to form a chromium-free pretreatment coating layer having a dry thickness of 0.05 to 1.0 µm, baking the pretreatment coating layer at a temperature of 60 to 298°C, following by cooling.

Examples of suitable plated steel sheets that can be used in the present invention include, but are not limited to, cold rolled steel sheets, galvanized steel sheets and zinc-alloy plated steel sheets. Various plating processes, such as electroplating, dipping plating and evaporation deposition, can be employed to plate zinc or a zinc alloy with at least one metal, such as iron, nickel or cobalt, on a base steel sheet.

First, the chromium-free pretreatment solution of the present invention is applied to the plated steel sheet to form a chromium-free pretreatment coating layer having a dry thickness of 0.05 to 1.0 µm. Thereafter, the pretreatment coating layer is baked at a temperature of 60°C or higher, followed by cooling with air or water. At this time, if the baking temperature is lower than 60°C, the coating layer is incompletely baked, which causes delamination of the coating layer. Otherwise, the baking temperature is higher than 298°C, the layer will be burnt out or be decomposed. A dry thickness of less than 0.05 µm leads to deterioration of corrosion resistance and adhesion to resins. Meanwhile, a dry thickness exceeding 1.0 µm causes an increase in production costs and remarkable deterioration of weldability.

According to the invention, it can be provided the pre-sealed steel sheet with chromium-free coating layer formed on metal base or at least one surface of the metal base by coating chromium-free pretreatment solution on at least one surface of plated steel sheet.

The weldable resin solution of the present invention is applied to the plated steel sheet pretreated with the chromium-free pretreatment solution to form a coating layer having a dry thickness of 2.0 to 5.0 µm. (At this time, the amount of the resin is in the range of 6.0 to 15.0 g/m².) A dry thickness of less than 2.0 µm leads to deterioration of physical properties, such as corrosion resistance. Meanwhile, a dry thickness exceeding 5.0 µm leads to an increase in the resin thickness, causing problems during welding.

After application of the weldable resin solution, the resulting structure is baked at a temperature of 220-298°C. If the baking temperature is lower than 220°C, the resin is insufficiently hardened and thus the physical properties of the coating layer are deteriorated. Meanwhile, if the baking temperature is higher than 298°C, constituent materials of the base steel sheet are denatured and the amount of heat is unnecessarily consumed without further hardening. After completion of the baking, the baked structure is cooled by a common cooling process, such as water-cooling or air-cooling, to complete the production of the final pre-sealed steel sheet.

The pre-sealed steel sheet thus produced exhibits improved corrosion resistance, weldability, chipping resistance, adhesiveness and processability. In addition, the pre-sealed steel sheet of the present invention is suitable to use in hidden parts and hems of car bodies where phosphate coating layers or electrodeposition coating layers are not readily formed.

### Mode for the Invention

Hereinafter, the present invention will be explained in greater detail with reference to the following examples. However, these examples are not to be construed as limiting the scope of the invention.

### Example I (Chromium-free pretreatment solutions)

### Example I-1

In this example, the stability of chromium-free pretreatment resin solutions and physical properties of resin-coated structures were evaluated by varying the contents of a resin, hardeners and a water-dispersible nanoclay in the resin solutions.

At least one resin selected from epoxy and acrylic resins was used as the resin, an amide resin and a melamine resin were used as hardeners, and a bentonite nanoclay was used as the water-dispersible nanoclay. These components were blended in accordance with the compositions shown in Table I-1, and then 15.0% by weight of colloidal silica (pH: 9.0), 0.5% by weight of an aminocarboxylate compound as a corrosion resistance improver, 1.0% by weight of a polysiloxane compound as a dispersant, 0.5% by weight of an Al-Zr compound as a coupling agent, 0.5% by weight of an organic-Ti compound, and the balance of water were added thereto. The respective mixtures were blended to prepare Inventive solutions 1-4(using epoxy resin in solutions 1-2, and acrylic resin in solutions 3-4) and Comparative solutions 1-20(using epoxy resin in solutions 1-10, and acrylic resin in solutions 11-20).

Thereafter, the stability of the solutions was evaluated. Further, the corrosion resistance, weldability and adhesiveness after resin coating were evaluated using specimens on which the solutions were coated.

Taking into account sufficient time when the solutions could be actually used, the stability of the solutions was evaluated by determining the volume fraction of a precipitate after storage for 7 days at room temperature and depending on whether or not a gel was formed in the solutions after storage for 30 days at room temperature.

The solutions were judged to be '⊚' when no precipitate was obtained and no gel was formed, 'Δ' when a precipitate was obtained in an amount of 2 vol% or more or a gel was formed, and 'X' when a precipitate was obtained in an amount of 5 vol% or more and a gel was formed.

Specimens for the measurement of corrosion resistance and weldability were produced in accordance with the following procedure. First, each of the solutions was applied to an electrically galvanized or zinc alloy-plated steel sheet, which had a thickness of 0.65 to 0.75 mm and a plating amount of 40 to 60 g/m², using a bar coater to form a coating layer having a dry thickness of 0.2 µm. Next, the coating layer was baked at a temperature of 90°C and air-cooled to produce specimens.

The corrosion resistance of the specimens was evaluated using a saltwater spray tester (SST) at 35°C. Specifically, the time required until white rust and red rust were observed in an area of 5% or more was measured to examine the corrosion state. The corrosion resistance of the specimens was evaluated based on the following criteria:
⊚ - Occurrence of red rust > 96 hrs, occurrence of white rust > 48 hrs
○ - Occurrence of red rust: 72-96 hrs, occurrence of white rust: 24-48 hrs
□ - Occurrence of red rust: 48-72 hrs, occurrence of white rust: 12-24 hrs
Δ - Occurrence of red rust: 24-48 hrs, occurrence of white rust < 12 hrs
× - Occurrence of red rust < 24 hrs

To evaluate the weldability of the specimens, each of the specimens was welded using an AC air-pressure spot welder under the following conditions:
. Welding current: 8 kA
. Welding pressure: 250 kgf
. Welding time: 16 cycles
. Welding electrodes: RWMA class II (Cu-Cr alloy) electrodes.

The weldability of the specimens was evaluated by a continuous spot-welding test. First, each of the specimens was cut into two test pieces having a length 80 mm and a width of 20 mm. The two test pieces were partially overlapped up to 20 mm from the end of one of the test pieces, and then spot welding was conducted at central points of the overlapped portion. The number of the spots when the test pieces were separated from each other using a tensile tester was counted. The number of the spots was considered as the number of continuous spots. The weldability of the specimens was evaluated based on the following criteria:
⊚ - Number of continuous spots > 1,200
○ - Number of continuous spots: 1,000-1,200
□ - Number of continuous spots: 800-1,000
Δ - Number of continuous spots < 800
× - Welding impossible

The adhesiveness of the specimens was evaluated in accordance with the following procedure. First, a pre-sealed resin solution (Granocoat ZE, Henkel, Germany, hereinafter referred to simply as a 'pre-sealed resin') was coated on top of the pretreatment layer using a bar coater to form a coating layer having a dry thickness of 2.5 to 4.5 µm, baked at 230-280°C, water-cooled, and dried to produce specimens. The dried specimen was cut into test pieces having a size of 30 mm × 50 mm, dipped in boiling water for 30 minutes, and dried. The degree of peeling of the dried test pieces was measured by attaching a scotch tape to the test pieces, removing the scotch tape from the test pieces, and measuring the area of the resin remaining on the scotch tape. The adhesiveness of the specimen was evaluated based on the following criteria:
⊚ - No peeling observed on the tape surface
□ - Peeling observed in an area of 5% or less relative to the surface area of the tape
Δ - Peeling observed in an area of 5% or more relative to the surface area of the tape
× - Peeling observed on entire surface of the tape

**Table 7**

| Solution No. | Solutions | | | | | Quality evaluation | | | |
|---|---|---|---|---|---|---|---|---|---|
| | Acrylic resin | | Hardeners | | Nanoclay | Stability of solution | Corrosion resistance | Adhesion to resin | Weldability |
| | M_{w} | Content | Kind | Content | Content | | | | |
| C.S.1 | 5000 | | | | 0 | Δ | × | ⊚ | ⊚ |
| C.S.2 | 10000 | | | | | Δ | Δ | ⊚ | ⊚ |
| C.S.3 | 15000 | | | | | Δ | □ | ⊚ | ⊚ |
| C.S.4 | 30000 | | | 3 | | ⊚ | □ | ⊚ | ⊚ |
| C.S.5 | 30000 | | Amide resin | | 5 | | | | |
| C.S.6 | 40000 | | | | 10 | Δ | □ | ⊚ | ○ |
| C.S.7 | 70000 | | | | | □ | □ | ⊚ | ○ |
| C.S.8 | 80000 | | | | | Δ | □ | □ | ○ |
| C.S.9 | 500 | | | 10 | 0.03 | ⊚ | Δ | □ | ⊚ |
| C.S.10 | 1500 | | | | | ⊚ | Δ | □ | ○ |
| C.S.11 | 3000 | | | | | ⊚ | □ | □ | ⊚ |
| C.S.12 | | | | 0.05 | 0.5 | ⊚ | □ | ⊚ | ⊚ |
| I.S.1 | | 10 | | 0.5 | | ⊚ | ⊚ | ⊚ | ⊚ |
| I.S.2 | | | | 1 | | ⊚ | ⊚ | ⊚ | ⊚ |
| I.S.3 | | | | 3 | | ⊚ | ⊚ | ⊚ | ⊚ |
| I.S.4 | 10000 | | Melamine resin | 5 | | ⊚ | ⊚ | ⊚ | ⊚ |
| C.S.13 | | | | 1 | 7.0 | Δ | ⊚ | ⊚ | ○ |
| C.S.14 | | | | 3 | | × | ⊚ | ⊚ | ○ |
| C.S.15 | | | | 5 | | × | ⊚ | ⊚ | ○ |
| C.S.16 | | | | 5 | 0 | □ | □ | ⊚ | ⊚ |
| C.S.17 | | | | 10 | 5.0 | Δ | ⊚ | □ | ⊚ |
| C.S.18 | 30000 | | | | | □ | ⊚ | ⊚ | ○ |
| C.S.19 | 50000 | | | | | □ | □ | ⊚ | ○ |
| C.S.20 | 80000 | | | | | Δ | □ | □ | □ |

| | | | | | | | | | |
|---|---|---|---|---|---|---|---|---|---|
| * Note: C.S.- Comparative Solution, I.S.- Inventive Solution. | | | | | | | | | |

### Example I-2

Prepare pretreatment solutions of Comparative solutions 21-36 and Inventive solutions 5-10 with 10% by weight of acrylic resin having a molecular weight of 10,000, 5% by weight of melamine resin, 0.5% by weight of a bentonite nanoclay, colloidal silica (pH: 9.0), an amino carboxylate rust inhibitor, a carboxylate dispersant, a silane coupling agent, an organic-Ti oxide, and the balance of water in accordance with the compositions shown in Table I-2. Then, the stability of the solution was evaluated by varying the contents of these additives. Each of the pretreatment solutions of Comparative Solutions 21-36 and Inventive Solutions 5-10 was coated on a steel sheet in the same as in Example I-1, and thereafter, the corrosion resistance, adhesiveness after processing, adhesion to the resin and weldability of the coated steel sheet were evaluated.

The adhesiveness after processing was evaluated by molding a circular specimen having a diameter of 95 mm into a 25 mm-high cup, attaching a scotch tape to the most severely processed side of the specimen, removing the scotch tape from the specimen, and measuring the area of the specimen remaining on the scotch tape. The adhesiveness after processing was evaluated based on the following criteria:
⊚ - No peeling observed on the tape surface
□ - Peeling observed in an area of 5% or less relative to the surface area of the tape
Δ - Peeling observed in an area of 5% or more relative to the surface area of the tape
× - Peeling observed on entire surface of the tape

The stability of the solutions, corrosion resistance, adhesion to the resin and weldability were evaluated in the same manner as in Example I-1.

**Table 8**

| Solution No. | Additives | | | | | Quality evaluation | | | | |
|---|---|---|---|---|---|---|---|---|---|---|
| | Silica | Organic Ti | Dispersant | Coupling agent | Corrosion resistance improver | S.S. | C.R. | A.R. | A.P. | Weldability |
| C.S.21 | 0 | 0.1 | 0 | 0 | 2.0 | ⊚ | × | × | × | ⊚ |
| C.S.22 | 1 | 0 | 0.1 | 0.2 | 0.2 | ⊚ | □ | Δ | Δ | ○ |
| I.S.5 | 5 | 0.2 | 0.5 | 0.5 | 0.5 | ⊚ | ⊚ | ⊚ | ⊚ | ⊚ |
| I.S.6 | 5 | 0.5 | 3.0 | 2.U | 2.0 | ⊚ | ⊚ | ⊚ | ⊚ | ⊚ |
| C.S.23 | 10 | 4.0 | 5.0 | 1.0 | 3.0 | × | ○ | ⊚ | ⊚ | □ |
| C.S.24 | 10 | 1.0 | 10.0 | 2.0 | 5.0 | Δ | ○ | ⊚ | ⊚ | □ |
| C.S.25 | 10 | 5.0 | 0.5 | 3.0 | 7.5 | Δ | ⊚ | □ | Δ | □ |
| I.S.7 | 10 | 0.5 | 1.0 | 0.5 | 0.5 | ⊚ | ⊚ | ⊚ | ⊚ | ⊚ |
| I.S.8 | 10 | 1.0 | 2.0 | 1.0 | 1.0 | ⊚ | ⊚ | ⊚ | ⊚ | ⊚ |
| I.S.9 | 10 | 3.0 | 3.0 | 2.0 | 2.0 | ⊚ | ⊚ | ⊚ | ⊚ | ⊚ |
| C.S.26 | 15 | 1.5 | 2.0 | 5.0 | 10.0 | ⊚ | ⊚ | Δ | × | ⊚ |
| C.S.27 | 15 | 5.0 | 5.0 | 0.2 | 0 | □ | ○ | ⊚ | ⊚ | ⊚ |
| C.S.28 | 15 | 2.0 | 8.0 | 0.5 | 0.2 | ⊚ | ⊚ | □ | Δ | ⊚ |
| C.S.29 | 20 | 7.0 | 10.0 | 0 | 0.5 | Δ | ⊚ | Δ | × | ⊚ |
| I.S.10 | 20 | 0.5 | 0.5 | 2.0 | 1.0 | ⊚ | ⊚ | ⊚ | ⊚ | ⊚ |
| C.S.30 | 20 | 15.0 | 2.0 | 1.0 | 2.0 | × | ⊚ | □ | × | ⊚ |
| C.S.31 | 25 | 3.0 | 5.0 | 2.0 | 3.0 | Δ | ⊚ | ⊚ | ⊚ | ⊚ |
| C.S.32 | 25 | 10.0 | 8.0 | 3.0 | 5.0 | Δ | ⊚ | Δ | × | ⊚ |
| C.S.33 | 25 | 0.1 | 10.0 | 5.0 | 7.5 | × | ⊚ | Δ | × | ○ |
| C.S.34 | 30 | 0 | 0.5 | 0.2 | 10.0 | × | ⊚ | ⊚ | ⊚ | □ |
| C.S.35 | 30 | 02 | 2.0 | 0.5 | 0 | Δ | Δ | ⊚ | ⊚ | □ |
| C.S.36 | 30 | 3.5 | 5.0 | 0 | 0.2 | □ | Δ | □ | × | Δ |

| | | | | | | | | | | |
|---|---|---|---|---|---|---|---|---|---|---|
| * Note: C.S.- Comparative Solution, I.S.- Inventive Solution, S.S.- Stability of solution, C.R.- Corrosion resistance, A.R.- Adhesion to resin, A.P.- Adhesiveness after processing | | | | | | | | | | |

### Example I-3

The solution of Inventive Solution 5 prepared in Example I-2 was coated on zinc alloy-plated or electrically plated steel sheets as base steel sheets, each of which had a thickness of 0.7 mm and a plating amount of 40 to 60 g/m², and baked at the baking temperatures shown in Table I-3 to form coating layers having the dry thicknesses shown in Table 1-3. The resulting structures (Comparative Structures 1-5 and Inventive Structures 1-6) were evaluated through the same method in preceding examples for corrosion resistance, adhesion to the resin, adhesiveness after processing and weldability.

**Table 9**

| Structure No. | Production conditions | | Quality evaluation | | | |
|---|---|---|---|---|---|---|
| | Baking Temp. (°C) | Thickness of coating layer (µm) | Corrosion resistance | Adhesiveness | Adhesiveness after processing | Weldability |
| C.S.1 | 50 | 0.2 | Δ | × | × | ⊚ |
| C.S.2 | 80 | 0.01 | × | Δ | ⊚ | ⊚ |
| I.S.1 | 80 | 0.2 | ⊚ | ⊚ | ⊚ | ⊚ |
| I.S.2 | 100 | 0.5 | ⊚ | ⊚ | ⊚ | ⊚ |
| C.S.3 | 120 | 0.03 | × | ⊚ | ○ | ⊚ |
| C.S.4 | 140 | 1.5 | ⊚ | ○ | □ | × |
| I.S.3 | 120 | 1.0 | ⊚ | ⊚ | ⊚ | ⊚ |
| I.S.4 | 140 | 0.8 | ⊚ | ⊚ | ⊚ | ⊚ |
| I.S.5 | 160 | 0.1 | ⊚ | ⊚ | ⊚ | ⊚ |
| C.S.5 | 180 | 1.2 | ⊚ | ○ | □ | Δ |
| I.S.6 | 200 | 0.2 | ⊚ | ⊚ | ⊚ | ⊚ |

| | | | | | | |
|---|---|---|---|---|---|---|
| * Note: C.S.- Comparative Structure, I.S.- Inventive Structure | | | | | | |

As can be seen from the data shown in Table I-3, when the chromium-free pretreatment solution of the present invention was used to form pretreatment layers of pre-sealed steel sheets, the following advantageous effects were attained: improved corrosion resistance, good adhesion to the resin and decreased drying temperature due to the resin, improved corrosion resistance and adhesiveness due to the silica, improved corrosion resistance and ensured solution stability due to barrier effect of the nanoclay, improved corrosion resistance, improved weldability and ease of analysis of the plating amount due to the organic-Ti compound, ensured adhesion to the base steel sheets due to the coupling agent, and ease of coating treatment and ease of resin coatability due to the dispersant.

### Example II (Weldable resin solutions)

### Example II-1

In this example, the stability of weldable resin solutions and physical properties of resin-coated structures were evaluated by varying the contents of a resin and hardeners in the weldable resin solutions.

An epoxy resin, and a melamine resin and a amide resin as a hardner, urethane resin having an equivalent weight of about 375 based on the NCO, and metallic powders were blended in accordance with the compositions shown in Table II-1, and then 10.0% by weight of calcium ion-exchanged amorphous silicon dioxide, 1.0% by weight of a polysiloxane dispersant, 1.0% by weight of an organic-Ti compound and the balance of xylene as a solvent were added thereto. The respective mixtures were blended to prepare solutions (Inventive Solutions 1-4 and Comparative Solutions 1-20).

Thereafter, the stability of the solutions was evaluated. Further, the corrosion resistance, adhesiveness and weldability were evaluated using specimens on which the solutions were coated.

Taking into account sufficient time when the solutions could be actually used, the stability of the solutions was evaluated depending on whether or not a gel was formed in the solutions after storage for 30 days at room temperature.

The solutions were judged to be '⊚' when no precipitate was obtained and no gel was formed, 'Δ' when a precipitate was obtained in an amount of 5 vol% or less or a gel was partially formed, and 'x' when a precipitate was obtained in an amount of 5 vol% or more and a gel was formed.

Specimens for the measurement of corrosion resistance, adhesiveness and weldability were produced in accordance with the following procedure. First, a chromium-free pretreatment solution was applied to an electrically galvanized or zinc alloy-plated steel sheet, which had a thickness of 0.65 to 0.75 mm and a plating amount of 40 to 60 g/m² , to form a pretreatment coating layer having a dry thickness of 0.2 µm. Then, each of the weldable resin solutions was coated on the pretreatment coating layer to form a coating layer having a dry thickness of 2.5 to 3.5 µm. The coating layer was baked at a temperature of 240°C, air-cooled, and dried to produce specimens.

The corrosion resistance of the specimens was evaluated using a saltwater spray tester (SST) at 35°C. Specifically, the time required until white rust and red rust were observed was measured to examine the corrosion state. The corrosion resistance of the specimens was evaluated based on the following criteria:
⊚ - Occurrence of red rust > 1200 hrs, occurrence of white rust > 800 hrs
○ - Occurrence of red rust > 1000 hrs, occurrence of white rust: 600-800 hrs
□ - Occurrence of red rust: 800-1000 hrs, occurrence of white rust: 400-600 hrs
Δ - Occurrence of red rust: 600-800 hrs, occurrence of white rust < 400 hrs
× - Occurrence of red rust < 600 hrs

The adhesiveness was evaluated in accordance with the following procedure. Each of the specimens was cut into test pieces having a size of 30 mm x 50 mm, dipped in boiling water for 30 minutes, and dried. The degree of peeling of the dried test pieces was measured by attaching a scotch tape to the test pieces, removing the scotch tape from the test pieces, and measuring the area of the resin remaining on the scotch tape. The adhesiveness of the specimen was evaluated based on the following criteria:
⊚ - No peeling observed on the tape surface
□ - Peeling observed in an area of 5% or less relative to the surface area of the tape
Δ - Peeling observed in an area of 5% or more relative to the surface area of the tape
× - Peeling observed on entire surface of the tape

To evaluate the weldability of the specimens, each of the specimens was welded using an AC air-pressure spot welder under the following conditions:
. Welding current: 8 kA
. Welding pressure: 250 kgf
. Welding time: 16 cycles
. Welding electrodes: RWMA class II (Cu-Cr alloy) electrodes.

The weldability of the specimens was evaluated by a continuous spot-welding test. First, each of the specimens was cut into two test pieces having a length 80 mm and a width of 20 mm. The two test pieces were partially overlapped up to 20 mm from the end of one of the test pieces, and then spot welding was conducted at central points of the overlapped portion. The number of the spots when the test pieces were separated from each other using a tensile tester was counted. The number of the spots was considered as the number of continuous spots. The weldability of the specimens was evaluated based on the following criteria:
⊚ - Number of continuous spots > 1,200
○ - Number of continuous spots: 1,000-1,200
□ - Number of continuous spots: 800-1,000
Δ - Number of continuous spots < 800
× - Welding impossible

**Table 10**

| Solution No. | Solutions | | | | | | | | Quality evaluation | | | |
|---|---|---|---|---|---|---|---|---|---|---|---|---|
| | Epoxy resin | | Melamine resin | | Urethane resin | | Metal powder | | S.S. | C.R. | Adh. | Wld, |
| | M_{w} | Content | Kind | Content | Kind | Content | Kind | Content | | | | |
| C.S.1 | - | 0 | | 20 | | 0 | | 30 | Δ | × | × | Δ |
| C.S.2 | 100 | 20 | | 1 | | 0.5 | | 40 | Δ | □ | ⊚ | Δ |
| C.S.3 | 200 | 10 | | 5 | B. L | 2 | | 5 | Δ | 0 | ⊚ | ⊚ |
| C.S.4 | 200 | 20 | A.R. | 5 | | 5 | | 55 | Δ | 0 | ⊚ | ⊚ |
| C.S.5 | 500 | 15 | | 10 | | 5 | Zn (3µm) | 60 | Δ | ⊚ | □ | ⊚ |
| C.S.6 | 1000 | 20 | | 15 | | 8 | | 80 | Δ | 0 | ⊚ | ⊚ |
| C.S.7 | 100 | 20 | | 1 | T.D. | 0 | | 40 | Δ | 0 | ⊚ | 0 |
| C.S.8 | 200 | 10 | | 5 | | 0.5 | | 50 | × | □ | □ | ⊚ |
| C.S.9 | 200 | 20 | | 5 | | 2 | | 60 | × | Δ | □ | ⊚ |
| C.S.10 | 500 | 15 | | 10 | | 5 | Zn (8µm) | 40 | × | □ | Δ | □ |
| C.S.11 | 1000 | 20 | | 10 | | 5 | | 50 | × | □ | Δ | ⊚ |
| C.S.12 | 1000 | 15 | | 15 | | 8 | | 60 | × | □ | × | ⊚ |
| I.S.1 | 200 | 10 | | 5 | | 1 | | 40 | ⊚ | ⊚ | ⊚ | ⊚ |
| I.S.2 | 200 | 20 | | 5 | B.1 | 2 | | 5 | ⊚ | ⊚ | ⊚ | ⊚ |
| I.S.3 | 500 | 15 | | 10 | | 5 | | 50 | ⊚ | ⊚ | ⊚ | ⊚ |
| I.S.4 | 500 | 15 | M.M. | 10 | | 5 | Zn (3µm) | 60 | ⊚ | ⊚ | ⊚ | ⊚ |
| C.S.13 | 100 | 15 | | 1 | | 0.5 | | 40 | Δ | ⊚ | □ | 0 |
| C.S.14 | 200 | 20 | | 5 | | 2 | | 50 | × | 0 | □ | 0 |
| C.S.15 | 500 | 15 | | 10 | M.D. | 5 | | 60 | × | 0 | □ | □ |
| C.S.16 | 500 | 20 | | 10 | | 5 | | 40 | × | □ | □ | 0 |
| C.S.17 | 1000 | 15 | | 5 | | 8 | | 50 | × | 0 | □ | ⊚ |
| C.S.18 | 2000 | 20 | | 1 | | 20 | | 60 | Δ | 0 | ⊚ | □ |
| I.S.5 | 200 | 20 | | 10 | | 2 | Fe₂P (2µm) | 40 | ⊚ | ⊚ | ⊚ | ⊚ |
| I.S.6 | 500 | 15 | | 5 | B.I. | 5 | | 60 | ⊚ | ⊚ | ⊚ | ⊚ |
| C.S.19 | 1000 | 20 | | 5 | | 5 | | 40 | ⊚ | 0 | ⊚ | □ |
| C.S.20 | 2000 | 20 | | 10 | | 5 | | 60 | ⊚ | 0 | ⊚ | □ |

| | | | | | | | | | | | | |
|---|---|---|---|---|---|---|---|---|---|---|---|---|
| * Note: C.S.- Comparative Solution, I.S.- Inventive Solution, A.R.- Amide resin, M.M.- Methylated melamine resin, B.I.- Blocked isocyanate, T.D.- Toluene diisocyanate, M.D.- Methyl diisocyanate, S.S.- Stability of solution, C.R.- Corrosion resistance, Adh.- Adhesiveness, Wld.- Weldability | | | | | | | | | | | | |

### Example II-2

10% by weight of an epoxy resin having a molecular weight of 500, 6% by weight of methylated melamine resin, 2% by weight of blocked isocyanate urethane resin, 40% by weight of Zn powders with 3.0µm of average particle sizes, Ca ion-substituted amorphous silicon dioxide with 3.0µm of average particle sizes, a polysiloxane dispersant, an organozirconate oxide, sorbitol polyglycidyl ether as an adhesion enhancer having a molecular weight of about 200, a silane compound, polytetrafluoroethylene modified polyethylene wax, and the balance of xylene as a solvent were blended in accordance with the compositions shown in Table II-2 to prepare resin solutions (Comparative Solutions 21-39 and Inventive Solutions 5-8). Threrafter, the stability of the resin solutions was evaluated by varying the contents of the additives. Each of the resin solutions of Comparative Solutions 21-39 and Inventive Solutions 5-8 was coated on a steel sheet in the same as in Example II-1, and thereafter, the corrosion resistance, adhesiveness after processing, adhesion to the resin and weldability of the resin-coated steel sheet were evaluated.

The processability was evaluated by measuring the lateral friction coefficient values of three specimens in a state in which no oil was applied through a draw bead test, and averaging the measured values. The processability of the specimens was evaluated based on the following criteria:
□ - Lateral friction coefficient < 0.15
□ - Lateral friction coefficient: 0.15-0.18
□ - Lateral friction coefficient: 0.18-0.20
X - Lateral friction coefficient > 0.20

The adhesiveness after processing was evaluated by molding a circular specimen having a diameter of 95 mm into a 25 mm-high cup, attaching a scotch tape to the most severely processed side of the specimen, removing the scotch tape from the specimen, and measuring the area of the specimen remaining on the scotch tape. The adhesiveness after processing was evaluated based on the following criteria:
□ - No peeling observed on the tape surface
□ - Peeling observed in an area of 5% or less relative to the surface area of the tape
□ - Peeling observed in an area of 5% or more relative to the surface area of the tape
x - Peeling observed on entire surface of the tape

The stability of the solutions, corrosion resistance, adhesion to the resin and weldability were evaluated in the same manner as in Example II-1.

The stability, corrosion resistance, resin adhesiveness and weldability of the solutions were evaluated in the same manner as in Example II-1.

**Table 11**

| **Solution No.** | **Additives** | | | | | | **Quality evaluation** | | | | | |
|---|---|---|---|---|---|---|---|---|---|---|---|---|
| | **A.S.** | **Dsp.** | **Org. Zr** | **Ether** | **Silane** | **Wax** | **S.S.** | **C.R.** | **Adh.** | **Proc.** | **A.P.** | **Wld.** |
| C.S.21 | 5 | 0 | 0 | 0 | 0 | 0 | Δ | × | × | × | × | 0 |
| C.S.22 | 5 | 0.1 | 0.2 | 0.5 | 0.2 | 0.5 | Δ | 0 | □ | Δ | □ | 0 |
| I.S.5 | 5 | 0.5 | 0.5 | 1.0 | 0.5 | 2.0 | ⊚ | ⊚ | ⊚ | ⊚ | ⊚ | ⊚ |
| C.S.23 | 5 | 1 | 2.0 | 5.0 | 3.0 | 5.0 | ⊚ | □ | ⊚ | ⊚ | ⊚ | ⊚ |
| I.S.6 | 5 | 2 | 5.0 | 3.0 | 5.0 | 1.0 | ⊚ | ⊚ | ⊚ | ⊚ | ⊚ | ⊚ |
| C.S.24 | 5 | 5 | 8.0 | 0.5 | 8.0 | 0.5 | ⊚ | ⊚ | □ | Δ | □ | ⊚ |
| C.S.25 | 0 | 0.1 | 0.2 | 1.0 | 0.2 | 2.0 | ⊚ | × | ⊚ | ⊚ | ⊚ | ⊚ |
| C.S.26 | 5 | 0.5 | 0.5 | 5.0 | 0.5 | 5.0 | Δ | □ | □ | ⊚ | □ | ⊚ |
| C.S.27 | 5 | 1 | 2.0 | 6.0 | 3.0 | 0 | ⊚ | ⊚ | ⊚ | × | ⊚ | ⊚ |
| C.S.28 | 10 | 2 | 5.0 | 0.5 | 5.0 | 0.5 | Δ | ⊚ | ⊚ | Δ | ⊚ | ⊚ |
| C.S.29 | 10 | 5 | 8.0 | 1.0 | 8.0 | 2.0 | Δ | ⊚ | □ | ⊚ | □ | ⊚ |
| C.S.30 | 10 | 0.1 | 10.0 | 5.0 | 0.2 | 5.0 | Δ | □ | Δ | ⊚ | Δ | ⊚ |
| C.S.31 | 10 | 0.5 | 0 | 6.0 | 0.5 | 0 | □ | 0 | ⊚ | × | ⊚ | ⊚ |
| C.S.32 | 10 | 1 | 02 | 0.5 | 3.0 | 0.5 | ⊚ | ⊚ | □ | Δ | □ | ⊚ |
| I.S.7 | 10 | 2 | 0.5 | 1.0 | 5.0 | 2.0 | ⊚ | ⊚ | ⊚ | ⊚ | ⊚ | ⊚ |
| C.S.33 | 10 | 2 | 2.0 | 5.0 | 8.0 | 5.0 | Δ | 0 | ⊚ | ⊚ | ⊚ | ⊚ |
| C.S.34 | 10 | 0.1 | 5.0 | 6.0 | 0.2 | 0 | Δ | ⊚ | ⊚ | × | ⊚ | ⊚ |
| C.S.35 | 15 | 0.5 | 8.0 | 0.5 | 0.5 | 0.5 | Δ | ⊚ | ⊚ | Δ | ⊚ | ⊚ |
| C.S.36 | 15 | 1 | 8.0 | 1.0 | 3.0 | 5.0 | Δ | 0 | Δ | ⊚ | Δ | ⊚ |
| I.S.8 | 15 | 2 | 5.0 | 5.0 | 5.0 | 2.0 | ⊚ | ⊚ | ⊚ | ⊚ | ⊚ | ⊚ |
| C.S.37 | 17 | 5 | 2.0 | 6.0 | 8.0 | 0 | Δ | ⊚ | □ | × | □ | □ |
| C.S.38 | 17 | 0 | 0.5 | 0.5 | 0.5 | 0.5 | × | ⊚ | □ | Δ | □ | □ |
| C.S.39 | 17 | 0.5 | 0.2 | 1.0 | 0 | 2.0 | Δ | ⊚ | × | ⊚ | × | Δ |

| | | | | | | | | | | | | |
|---|---|---|---|---|---|---|---|---|---|---|---|---|
| * Note: C.S.- Comparative Solution, I.S.- Inventive Solution, A.S.- Amorphous silica, Dsp.- Dispersant, Org. Zr - Organic-Zr compound, S.S.- Stability of solution, C.R.- Corrosion resistance, Adh.- Adhesiveness, Proc.- Processability, A.P.- Processability after processing, Wld.- Weldability | | | | | | | | | | | | |

### Example II-3

A chromium-free pretreatment coating layer having a dry thickness of 0.2 µm was formed on zinc alloy-plated or electrically plated steel sheets as base steel sheets, each of which had a thickness of 0.7 mm and a plating amount of 40 to 60 g/m². Thereafter, the solution of Inventive Solution 5 prepared in Example II-2 was coated on the chromium-free pretreatment coating layer, and baked at the baking temperatures shown in Table II-3 to form coating layers having the dry thicknesses shown in Table II-3. The resulting structures (Comparative Structures 1-10 and Inventive Structures 1-4) were evaluated for corrosion resistance, adhesion to the resin, adhesiveness after processing and weldability.

**Table 12**

| Structure No. | Production conditions | | Quality evaluation | | | |
|---|---|---|---|---|---|---|
| | Baking Temp.(°C) | Thickness of coating layer (µm) | Corrosion resistance | Adhesiveness | Adhesiveness after processing | Weldability |
| C.S.1 | 150 | 3.0 | × | × | × | × |
| C.S.2 | 180 | 3.5 | × | × | × | □ |
| C.S.3 | 200 | 1.5 | Δ | □ | Δ | ⊚ |
| C.S.4 | 230 | 1.5 | Δ | ⊚ | □ | ⊚ |
| I.S.1 | 230 | 3.5 | ⊚ | ⊚ | ⊚ | ⊚ |
| I.S.2 | 230 | 4.0 | ⊚ | ⊚ | ⊚ | ⊚ |
| C.S.5 | 230 | 6.0 | ⊚ | 0 | ⊚ | × |
| C.S.6 | 250 | 1.0 | × | ⊚ | Δ | ⊚ |
| I.S.3 | 230 | 4.0 | ⊚ | ⊚ | ⊚ | ⊚ |
| I.S.4 | 250 | 4.0 | ⊚ | ⊚ | ⊚ | ⊚ |
| C.S.7 | 250 | 5.5 | ⊚ | ⊚ | ⊚ | Δ |
| C.S.8 | 300 | 2.0 | ⊚ | 0 | □ | Δ |
| C.S.9 | 300 | 3.5 | ⊚ | 0 | Δ | ⊚ |
| C.S.10 | 300 | 4.5 | ⊚ | × | Δ | 0 |

| | | | | | | |
|---|---|---|---|---|---|---|
| * Note: C.S.- Comparative Structure, I.S.- Inventive Structure | | | | | | |

As can be seen from the data shown in Table II-3, when the weldable resin solution was used to produce pre-sealed steel sheets, the following advantageous effects were attained: improved corrosion resistance due to the resin and the rust inhibitor, improved chipping resistance due to the urethane resin, ensured weldability due to the metal powder, good adhesion to the resin due to the silane and ether compound, ensured solution stability due to the dispersant, improved corrosion resistance and weldability due to the organic-Zr compound, ease of coating treatment due to the dispersant, and ease of processing due to the wax.

### Industrial Applicability

As apparent from the above description, the pre-sealed steel sheet of the present invention exhibits improved corrosion resistance, weldability, chipping resistance, adhesiveness, solution stability and processability. In addition, the pre-sealed steel sheet of the present invention is suitable to use in hidden parts and hems of car bodies where phosphate coating layers or electrodeposition coating layers are not readily formed.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. Composition of Chromium-free pretreatment solution for use in the production of a pre-sealed steel sheet, comprising 1.0 to 15.0% by weight of at least one resin selected from water-dispersible acrylic and epoxy resins having a number average molecular weight of 5,000 to 15,000, 0.05 to 5.0% by weight of at least one nanoclay selected from bentonite and montmorillonite nanoclays, 0.1 to 5.0% by weight of at least one resin as hardner selected from melamine-resin hardeners, 1.0 to 25.0% by weight of at least one silicate selected from colloidal silica and metal silicate compounds having a pH of 7.0 or above, 0.1 to 10.0% by weight of at least organometallic oxide selected from organotitanates and organozirconates, and the balance of water, based on the total weight of the pretreatment solution.

2. The composition of chromium-free pretreatment solution for use in the production of a pre-sealed steel sheet according to claim 1, wherein the chromium-free pretreatment solution further comprises less than 3.0% by weight of at least one dispersant selected from polysiloxane -based and carboxylic acid- based dispersants.

3. The composition of chromium-free pretreatment solution for use in the production of a pre-sealed steel sheet according to claim 1, wherein the chromium-free pretreatment solution further comprises less than 3.0% by weight of at least one coupling agent selected from Al-Zr compounds and 3-glycidoxypropyltrimethoxy silane.

4. The composition of chromium-free pretreatment solution for use in the production of a pre-sealed steel sheet according to claim 1, wherein the chromium-free pretreatment solution further comprises less than 5.0% by weight of an aminocarboxylate compound as a corrosion resistance improver.

5. Method for producing a pre-sealed steel sheet, the method comprising the steps of: applying chromium- free pretreatment solution of any one of claim 1 to 4 to at least one surface of the metal base to form a chromium-free pretreatment coating layer having a dry thickness of 0.05 to 1.0 µm; and forming the chromium-free pretreatment coating layer as baking the coated chromium-free pretreatment solution at a temperature of 60 to 298°C and following by cooling;

6. A pre-sealed steel sheet with improved corrosion resistance and weldability, comprising:
(a) a metal base; and
(b) a chromium-free pretreatment coating layer formed on at least one surface of the metal base by applying chromium-free pretreatment solution of any one of claim 1 to 4.

## Patentansprüche

1. Zusammensetzung einer chromfreien Vorbehandlungslösung zur Verwendung bei der Herstellung eines vorvergüteten Stahlblechs, umfassend 1,0 bis 15,0 Gew.% von mindestens einem Harz, ausgewählt aus wasserdispergierbaren Akryl- und Epoxydharzen, die eine Zahl des mittleren Molekulargewichts von of 5000 bis 15000, 0,05 bis 5,0 Gew% von mindestens einem Nanoton aufweisen, ausgewählt aus Bentonit- und Montmorillonit-Nanotonen, 0,1 bis 5,0 Gew.% von mindestens einem Harz als Härtungsmittel, ausgewählt aus Melaminharz-Härtungsmitteln, 1,0 bis 25,0 Gew% von mindestens einem Silicat, ausgewählt aus kolloidalen Siliciumoxiden und Metallsilikatzusammensetzungen mit einem pH-Wert von 7,0 oder höher, 0,10 bis 10,0 Gew% von mindestens einem organometallischen Oxid, ausgewählt aus Organotitanaten und Organozirkonaten, und dem Wassergleichgewicht, basierend auf dem Gesamtgewicht der Vorbehandlungslösung.

2. Zusammensetzung einer chromfreien Vorbehandlungslösung zur Verwendung bei der Herstellung eines vorvergüteten Stahlblechs nach Anspruch 1, wobei die chromfreie Vorbehandlungslösung weiter weniger als 3,0 Gew% von mindestens einem Dispergiermittel umfasst, ausgewählt aus Polysiloxan-basierten und Carboxylsäurebasierten Dispergiermitteln.

3. Zusammensetzung einer chromfreien Vorbehandlungslösung zur Verwendung bei der Herstellung eines vorvergüteten Stahlblechs nach Anspruch 1, wobei die chromfreie Vorbehandlungslösung weiter weniger als 3,0 Gew% von mindestens einem Haftmittel umfasst, ausgewählt aus Al-Zr-Verbindungen und 3-Glycidoxypropyltrimethoxysilan.

4. Zusammensetzung einer chromfreien Vorbehandlungslösung zur Verwendung bei der Herstellung eines vorvergüteten Stahlblechs nach Anspruch 1, wobei die chromfreie Vorbehandlungslösung weiter weniger als 5,0 Gew% von einer Aminocaboxylat-Zusammensetzung als Verbesserer der Korrosionssicherheit umfasst.

5. Verfahren zur Herstellung eines vorvergüteten Stahlblechs, wobei das Verfahren die folgenden Schritte umfasst: Aufbringen der chromfreien Vorbehandlungslösung nach einem der Ansprüche 1 bis 4, auf mindestens eine Fläche der Metallbasis, um eine chromfreie Vorbehandlungs-Beschichtung mit einer Trockendicke von of 0,05 to 1,0 µm zu bilden; und die chromfreie Vorbehandlungs-Beschichtung als Behandlung der beschichteten chromfreien Vorbehandlungslösung bei einer Temperatur von 60 bis 298 °C und gefolgt von einer Abkühlung zu bilden.

6. Vorvergütetes Stahlblech mit einer verbesserten Korrosionssicherheit und Verschweißbarkeit, umfassend:
(a) eine Metallbasis; und
(b) eine chromfreie Vorbehandlungs-Beschichtung gebildet auf mindestens eine Fläche der Metallbasis durch die Aufbringung einer chromfreien Vorbehandlungslösung nach einem der Ansprüche 1 bis 4.

## Revendications

1. Composition de solution de prétraitement sans chrome pour utilisation dans la fabrication d'une feuille d'acier pré-scellée, comprenant 1,0 à 15,0 % en poids d'au moins une résine choisie parmi les résines acryliques et époxy hydrodispersables ayant une masse moléculaire moyenne en nombre de 5 000 à 15 000, 0,05 à 5,0 % en poids d'au moins une nanoargile choisie parmi les nanoargiles de bentonite et de montmorillonite, 0,1 à 5,0 % en poids d'au moins une résine en tant que durcisseur choisie parmi les durcisseurs de résine mélamine, 1,0 à 25 % en poids d'au moins un silicate choisi parmi les composés de silice colloïdale et de silicate-métal ayant un pH de 7,0 ou plus, 0,1 à 10,0 % en poids d'au moins un oxyde organométallique choisi parmi des organotitanates ou des organozirconates, le reste étant de l'eau, sur la base du poids total de la solution de prétraitement.

2. Composition de solution de prétraitement sans chrome pour utilisation dans la fabrication d'une feuille d'acier pré-scellée selon la revendication 1, dans laquelle la solution de prétraitement sans chrome comprend en outre moins de 3,0 % en poids d'au moins un agent dispersant choisi parmi des agents dispersants à base de polysiloxane et à base d'acide carboxylique.

3. Composition de solution de prétraitement sans chrome pour utilisation dans la fabrication d'une feuille d'acier pré-scellée selon la revendication 1, dans laquelle la solution de prétraitement sans chrome comprend en outre moins de 3,0 % en poids d'au moins un agent de couplage choisi parmi des composés d'Al-Zr et du 3-glycidoxypropyltriméthoxy silane.

4. Composition de solution de prétraitement sans chrome pour utilisation dans la fabrication d'une feuille d'acier pré-scellée selon la revendication 1, dans laquelle la solution de prétraitement sans chrome comprend en outre moins de 5,0 % en poids d'un composé d'aminocarboxylate en tant qu'agent d'amélioration de la résistance à la corrosion.

5. Procédé de fabrication d'une feuille d'acier pré-scellée, le procédé comprenant les étapes suivantes :
l'application de solution de prétraitement sans chrome selon l'une quelconque des revendications 1 à 4 sur au moins une surface de la base métallique pour former une couche de revêtement de prétraitement sans chrome ayant une épaisseur à sec allant de 0,05 à 1,0 µm ; et la formation de la couche de revêtement de prétraitement sans chrome en faisant cuire la solution de prétraitement sans chrome revêtue à une température de 60 à 298°C et en la faisant ensuite refroidir ;

6. Feuille d'acier pré-scellée présentant une résistance à la corrosion et une soudabilité améliorées, comprenant :
(a) une base métallique ; et
(b) une couche de revêtement de prétraitement sans chrome formée sur au moins une surface de la base métallique en appliquant la solution de prétraitement sans chrome selon l'une quelconque des revendications 1 à 4.
